# EUROPEAN PATENT SPECIFICATION

(11) **EP 1 390 266 B1**
(45) Date of publication and mention of the grant of the patent: **09.02.2005**
(21) Application number: 02733623.9
(22) Date of filing: 24.05.2002
(51) Int. Cl.: B65D 23/08, B65D 85/30

(54) **PROTECTIVE DEVICE FOR CYLINDRICAL ARTICLES**
SCHUTZVORRICHTUNG FÜR ZYLINDRISCHE ARTIKEL
DISPOSITIF DE PROTECTION POUR OBJETS CYLINDRIQUES

(30) Priority: 25.05.2001 NO 20012575
(43) Date of publication of application: 25.02.2004
(73) Proprietor: Jenssen, Snorre Emil, 2080 Eidsvoll (NO)
(72) Inventor: Jenssen, Snorre Emil, 2080 Eidsvoll (NO)
(74) Representative: Onn, Thorsten
(86) International application number: PCT/NO2002/000182
(87) International publication number: WO 2002/094667

(56) References cited:
- EP-A1- 0 132 587
- DE-A1- 2 913 400
- DE-U1- 9 418 918
- FR-A1- 2 606 373
- GB-A- 2 317 601
- US-A- 3 131 240
- US-A- 3 680 726
- US-A- 3 972 435
- US-A- 5 111 975

## Description

The present invention relates to a protective device for cylindrical articles.

Systems for protecting cylindrical articles known hitherto comprise various forms of transport packaging which either is so bulky that it is not used or it is damaged after a short time, thereby losing its effect. Used types of packaging protection are removed before the article is put into use and new packaging protection is put on before it can be transported.

For instance, DE 2913400, upon which the preamble of claim 1 is based, describes a device for noise and transport protection of hollow articles of glass or metal. The device consists of a plastic material which is fitted around and optionally fastened to the articles in the areas most exposed to impact. The device is placed in the same position on the articles and thus ensures that it is the protective devices on two opposite articles which are the first to come into contact as the articles move towards each other. Wear thus occurs between the two protective devices. This means that the device has limited durability and it cannot be reused if it is fastened to the article.

Furthermore, EP132587 describes a bundle of pipes, where an anti-slip coating is applied in the form of an annular coating around the pipes in the bundle. As can be seen from the name, the purpose of the coating is to prevent the pipes from slipping from each other. The patent is especially directed towards smooth plastic pipes which, when transported, usually require measures in order to obtain bundles of pipes that do not slip during transport. The coating does not provide any noise reduction to speak of and cannot be reused.

Heavy cylindrical articles such as gas cylinders are exposed to considerable stresses when they are handled and transported between the place where the cylinders are filled and their point of use. Today, gas cylinders are often transported strapped together in a form of collective packaging. Despite this strapping together, the cylinders move so that noise and wear occur. To combat corrosion, the metal cylinders are coated with paint, but this paint has limited durability due to the handling described above. This results in both visual problems for the gas supplier and corrosion of the metal.

The object of the present invention is to provide a protective device for cylindrical articles which protects the articles against wear and damage and at the same time reduces the noise that occurs during the transport of these articles. The invention will be particularly well suited for protecting relatively heavy articles such as gas cylinders, pipes, tanks, containers and the like. A further object of the invention is to provide self-supporting protective devices which accompany the cylindrical articles. The device should therefore be inexpensive to produce whilst having a long life time. Furthermore, the device should be capable of being reused and of being moved freely between articles requiring protection.

The present invention thus provides a protective device for placing on the outside of a cylindrical article, for example a pipe, gas cylinder, container and the like, which consists of an essentially ring-shaped body having a break and that the body is surrounded by a shock-absorbing and noise-reducing coating, wherein the protective device, when brought into close contact with the circumference of the article to be protected is brought from a relaxed stated to a tensioned state by engagement with the surface of the article.

In a preferred embodiment of the invention, the ring is made of a spring steel or a hollow steel, more preferably a spring steel. It is also possible to make the body of an H-steel.

The coating on the device preferably comprises a polymer coating which surrounds the entire ring and its ends and an additional coating which only covers the internal circumference of the protective device. The coating which surrounds the whole ring is preferably made of a hard polymer and preferably contains polypropylene, polyethylene or mixtures thereof. Optionally, recycled polymers may be used. The internal coating may consist of an elastically yielding polymer or rubber material, and it preferably contains polyurethane or a thermoplastic elastomer.

It is also possible to apply an additional internal coating, preferably a polymer, to the body.

As used in this description and the attached claims, the term "ring" or "ring-shaped" means not only, for example, a roughly circular structure, but also ellipsoids, oval and drop-shaped structures, polygons and the like.

One advantage of the protective device according to the invention is that when it is used on gas cylinders, it lessens the need for maintenance, as abrasion and wear are reduced. Maintenance of gas cylinders comprises dismantling the valve, sandblasting, painting or lacquering, assembly and pressure testing. This comprehensive process may also include a cleaning step depending upon the quality of the gas with which the cylinder is to be filled. Maintenance of cylinders today is very costly.

In addition to the financial saving obtained as a result of the reduced need for maintenance, there is also the advantage of a visually more attractive product. The cylinders are also easier to keep clean, which is of particular importance in, for example, the hospital sector.

Another advantage of the invention is that it reduces impact noise from the articles during transport, thereby solving a major HSE (health, safety and the environment) problem.

Furthermore, the device is inexpensive to produce and has a long life time. In addition, the device does not take up much space and will therefore not require any changes to be made to means of transport and the like.

The dimensioning of the device will depend upon the size of the article to be protected. For example, for a gas cylinder having a diameter of about 24 cm, the body will have an average cross-sectional diameter in the range of 2-8 mm and the cross-sectional diameter of the device will be about 4-20 mm.

The protective device may be mounted from any available end of the cylindrical body. A fastening tool may optionally be used for the mounting. In that case, the device may be equipped with either holes or pins with which the tool can engage close to the break in the ring-shaped body.

When used on gas cylinders, the device can remain on the cylinders throughout the cycle: filling, transport, emptying and return transport. Thus, the invention does not require any extra steps in the normal operating cycle. Furthermore, protective devices which are placed on two adjacent cylinders can be arranged at different heights on their respective cylinder, thereby preventing the protective devices from rubbing against one another.

The coating on the body preferably covers the whole body and may have an additional coating on the inner side of the body that is to face the article. The inner coating may consist of an elastically yielding material, for example, a polymer material, preferably polyurethane. This coating provides particularly good sound reduction. At the same time, this softer material is protected by the coated device so that it is not exposed to direct wear. Thus, a device is obtained which has high wear-resistance and hence a long life.

In another embodiment of the invention the spring force can be increased by adding an elastic composite layer around the ring-shaped body before it is coated.

In the following the invention will be described in more detail with reference to the attached figures, wherein:
Figure 1 shows one embodiment of the protective device according to the invention.
Figure 2 shows a second embodiment of the device.
Figure 3 shows, by way of example, a possible cross-section of the device in Figure 1 or 2.
Figure 4 shows, by way of example, another possible cross-section of the device in Figure 1 or 2.
Figure 5 shows protective devices used for protection of gas cylinders.

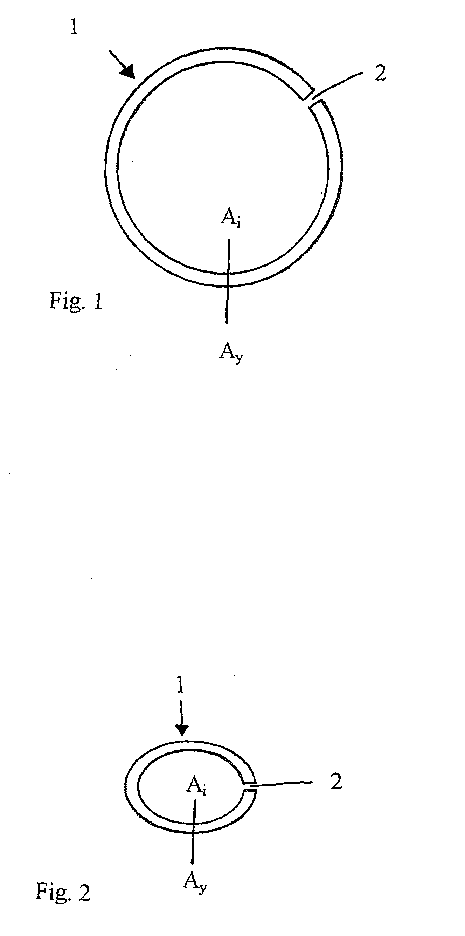

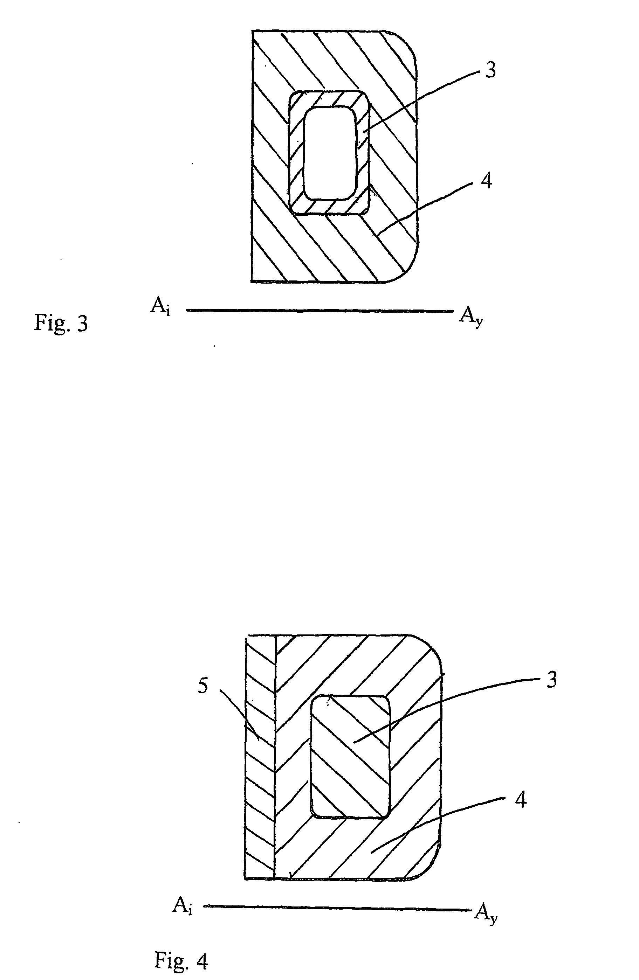

The design of the protective device 1 is, by way of example, illustrated in Figures 1 and 2. The invention is not limited to these structures, but may have all possible other ring-like shapes. The break 2 in the device 1, in the relaxed state illustrated here, may be both larger and smaller than that shown in the figures. The open ends may also optionally overlap each other in the relaxed state and optionally also in the tensioned state (not shown in the figures). The lines Aᵢ-A_{y} indicate the position of the cross-sectional illustrations in Figures 3 and 4. In the figures Aᵢ always denotes a point on the inner side of the ring-shaped body, whilst A_{y} denotes a point on the outer side of the body.

Figure 3 shows a possible embodiment where the body 3 is coated with a coating 4. The cross-section of the body may, for example, be rectangular, optionally with rounded comers as shown in the figure. Alternatively, the body may have a slightly more round cross-section. Similarly, the cross-section of the finished device may have a different shape; it may, for example, be "D-shaped" as in the figure, or rectangular, round, polygonal or conical.

Figure 4 shows a preferred embodiment of the invention where in addition to the coating 4, the body 3 is also coated on the side which is to face the article with a second coating 5, for example a polymer material.

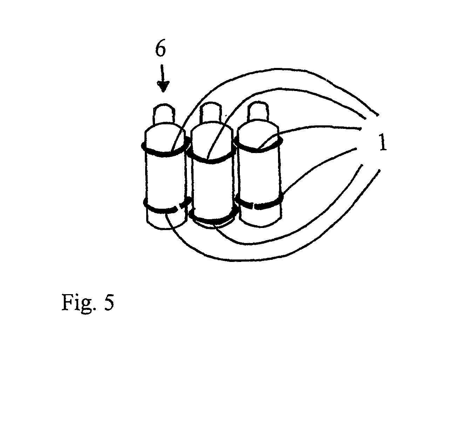

The use of protective devices according to the invention for protecting gas cylinders is outlined in Fig. 5. The protective devices 1 are placed at different heights on the gas cylinders 6 so that the cylinders do not come into direct contact with one another and the protective devices do not rub against one another.

## Claims

1. A circular protective device for placing on the outside of a cylindrical article (6), for example, a pipe, gas cylinder, container and the like, consisting of an essentially ring-shaped body (3) **characterized in that** the body has a break (2), and that the body is surrounded by a shock-absorbing and noise-reducing coating (4), wherein the protect-tive device (1) when brought into close contact with the circumference of the article to be protected, is brought from a relaxed state to a tensioned state by engagement with the surface of the article.

2. A protective device according to claim 1, **characterised in that** the body is made of a spring steel, a hollow steel or an H-steel.

3. A protective device according to claim 1, **characterised in that** the coating comprises a polymer coating (4) which surrounds the whole ring and an additional coating (5) facing the article, for example a polymer which only covers the internal circumference of the protective device.

4. A protective device according to claim 3, **characterised in that** the coating (4) which surrounds the whole ring contains polypropylene, polyethylene or mixtures thereof.

5. A protective device according to claim 3, **characterised in that** the coating which is arranged to face the article contains polyurethane or a thermoplastic elastomer.

## Patentansprüche

1. Kreisförmige Schutzvorrichtung zur Anbringung auf der Aussenseite eines zylindrischen Gegenstands (6), beispielsweise eines Rohrs, Gaszylinders, Behälters oder dergleichen, bestehend aus einem im wesentlichen ringförmigen Körper (3), **dadurch gekennzeichnet, dass** der Körper eine Lücke (2) aufweist und dass der Körper von einer stossabsorbierenden und geräuschdämpfenden Beschichtung (4) umgeben ist, wobei die Schutzvorrichtung (1) beim Anlegen an den Umfang des zu schützenden Gegenstands durch die Berührung mit der Oberfläche des Gegenstands aus einem entspannten Zustand in einen gespannten Zustand gebracht wird.

2. Schutzvorrichtung nach Anspruch 1, **dadurch gekennzeichnet, dass** der Körper aus Federstahl, Hohlstahl oder H-Stahl besteht.

3. Schutzvorrichtung nach Anspruch 1, **dadurch gekennzeichnet, dass** die Beschichtung eine Polymerbeschichtung (4) umfasst, die den ganzen Ring umgibt, sowie eine zusätzliche, dem Gegenstand zugewandte Beschichtung (5), beispielsweise ein Polymer, welches nur den inneren Umfang der Schutzvorrichtung bedeckt.

4. Schutzvorrichtung nach Anspruch 3, **dadurch gekennzeichnet, dass** die den ganzen Ring umgebende Beschichtung (4) Polypropylen, Polyethylen oder Mischungen daraus enthält.

5. Schutzvorrichtung nach Anspruch 3, **dadurch gekennzeichnet, dass** die dem Gegenstand zugewandte Beschichtung Polyurethan oder ein thermoplastisches Elastomer enthält.

## Revendications

1. Dispositif de protection circulaire pour pose sur le côté extérieur d'un objet cylindrique (6) tel qu'un tuyau, une bouteille à gaz, un récipient ou autre, constitué d'un corps essentiellement annulaire (3), **caractérisé en ce que** le corps présente une interruption (2), et **en ce que** le corps est entouré d'un revêtement (4) amortisseur de chocs et réducteur de bruit, le dispositif de protection (1) étant amené, lorsqu'il est mis en contact direct avec la circonférence de l'article à protéger, d'un état détendu à un état tendu par sa pose sur la surface de l'objet.

2. Dispositif de protection selon la revendication 1, **caractérisé en ce que** le corps est en acier à ressort, en acier creux ou en acier en H.

3. Dispositif de protection selon la revendication 1, **caractérisé en ce que** le revêtement comprend un revêtement en polymère (4) entourant l'anneau entier et un revêtement (5) supplémentaire en regard de l'article, par exemple un polymère qui ne couvre que la circonférence intérieure du dispositif de protection.

4. Dispositif de protection selon la revendication 3, **caractérisé en ce que** le revêtement (4) qui entoure l'anneau entier contient du polypropylène, du polyéthylène ou des mélanges de ces matériaux.

5. Dispositif de protection selon la revendication 3, **caractérisé en ce que** le revêtement en regard de l'objet contient du polyuréthane ou un élastomère thermoplastique.
